# EUROPEAN PATENT APPLICATION

(11) **EP 1 285 746 A1**
(43) Date of publication of application: **26.02.2003**
(21) Application number: 01119512.0
(22) Date of filing: 14.08.2001
(51) Int. Cl.: B32B 27/32, B60K 15/03

(54) **Emission reducing patch for multilayer plastic vessels**

(71) Applicant: Visteon Global Technologies, Inc., Dearborn, Michigan 48126 (US)
(72) Inventor: Rossi, Giuseppe, Dearborn, MI 48124 (US); Harris, Mark Alan, Dexter, MI 48130 (US); Nulman, Mark, West Bloomfield, MI 48322 (US)
(74) Representative: Copp, David Christopher

(57) **Abstract**

A method and apparatus for reducing permeate hydrocarbon emissions from a multilayer plastic fluid tank 10. The strategy for reducing emissions involves heat welding or otherwise applying a low permeation multilayer plastic patch 30 to the pinch off region 14 of the plastic fluid tank 10 to lengthen the diffusion path of permeate hydrocarbon (fuel) emissions. The width of the patch 30 running perpendicular to the sealing seam in the pinch off region 14 is a function of the thickness of the multilayer plastic fluid tank wall 12 within the pinch off region 14 and is preferably at least four times the thickness of the fuel tank wall 12 within the pinch off region 14. As the width of the patch 30 is increased further, the amount of hydrocarbon emissions decreases further.

## Description

### TECHNICAL FIELD

The present invention relates generally to fluid systems and more particularly to controlling emissions in multilayer plastic vessel fluid systems.

### BACKGROUND OF THE INVENTION

Fuel tanks for motorized vehicles have been used for many years. Typical fuel tanks are box-like, rectangular or cylindrical in shape and can contain from 10 to 30 gallons or more of a liquid fuel. Most of the current fuel tanks installed in motorized vehicles today are typically plastic or metallic in nature. However, fuel may be lost through joints between metal sections, from an instrument sensor port, from the fuel line leading to and from the engine, or from the fuel neck during refueling procedures. Further, in the case of plastic tanks, fuel may be lost through the plastic itself.

Recently, improvements to fuel tank technology have been directed to the manufacture of fuel tanks from thermoplastic, composite, or thermosetting materials using a variety of laminate or composite structures. One problem arising from the use of such materials in a fuel tank relates to increased permeability of fuel when compared to metal tanks.

To decrease the emission of fuel from these plastic tanks, improvements have focused on adding barrier layers resulting in tanks having multilayer walls. For example, U.S. Pat. No. 3,616,189 to Harr teaches an improved container having multiple layers including a nylon barrier film. However, the manufacture of multilayered or laminate materials often involves complex, expensive processing steps and expensive materials.

Another way to improve barrier properties of multilayer structures involves adding specific chemical barrier materials to the surface of the tanks or to the thermoplastic compositions used to make the tanks. For example, U.S. Pat. No. 3740,258 to Walles and U.S. Pat. No. 4,371,574 to Shefford teaches that the addition of sulphonic acid or sulphonate groups on the surface of tank materials can improve barrier properties. Further, U.S. Pat. No. 5,928,745 to Wood adds a cyclodextrin barrier additive to a thermoplastic material used in at least one layer of a multilayer thermoplastic fuel tank. While many of these systems improve barrier properties, significant improvements may still be achieved.

While the above solutions have improved the barrier properties of multilayer fuel tank systems, these systems do not address the residual permeation problems occurring at pinch off regions in the tank. Pinch off regions, or seams, are formed when cylindrical parisons (cylindrical sheets of hot molded plastic) of multilayered plastic are sealed to form an enclosed tank. Pinch off regions also occur in fuel tanks made by a thermoforming process. Studies indicated that there may be additional residual fuel emissions through this pinch off region. These studies have also shown that the amount of fuel permeating through a pinch off region is inversely proportional to the length of the diffusion path. It is thus highly desirable to increase the length of the diffusion path to decrease the amount of fuel permeating through a pinch off region.

### BRIEF SUMMARY OF THE INVENTION

It is thus an object of the present invention to increase the length of the diffusion path of fuel permeating through a pinch off region to decrease the amount of residual emissions in plastic fuel tanks.

The above and other objects of the present invention are accomplished by applying a low permeation barrier material to the outer surface of a pinch off region in a plastic fuel tank. In a preferred embodiment of the present invention, this is accomplished by applying a multilayer plastic patch containing a low permeation barrier material to the outer surface of the pinch off region of the plastic fuel tank. The width of the patch (measured perpendicular to the pinch off region) should be such to lengthen the original diffusion path (thickness of tank wall in pinch off region) by one order of magnitude or more.

Other objects and advantages of the present invention will become apparent upon considering the following detailed description and appended claims, and upon reference to the accompanying drawings.

### BRIEF DESCRIPTION OF THE DRAWINGS

Figure 1 shows a coextruded plastic fuel tank according to the prior art;

Figure 2 is a schematic illustration of six layers of the coextruded fuel tank according to a preferred embodiment of the present technology;

Figure 3 illustrates the pinch off region of a plastic fuel tank in accordance with the present invention;

Figure 4 illustrates a pinch off region of the plastic fuel tank having a multilayer plastic patch applied to its outer surface according to a preferred embodiment of the present invention;

Figure 5 illustrates the results of computer simulation of permeate diffusion through a pinch off region;

Figure 6 illustrates the results of computer simulation of permeate diffusion through a pinch off region having a patch whose width is 4 times the wall thickness in accordance with a preferred embodiment of the present invention; and

Figure 7 illustrates the results of computer simulation of permeate diffusion through a pinch off region having a patch whose width is 8 times the wall thickness in accordance with a preferred embodiment of the present invention.

### DETAILED DESCRIPTION OF THE INVENTION

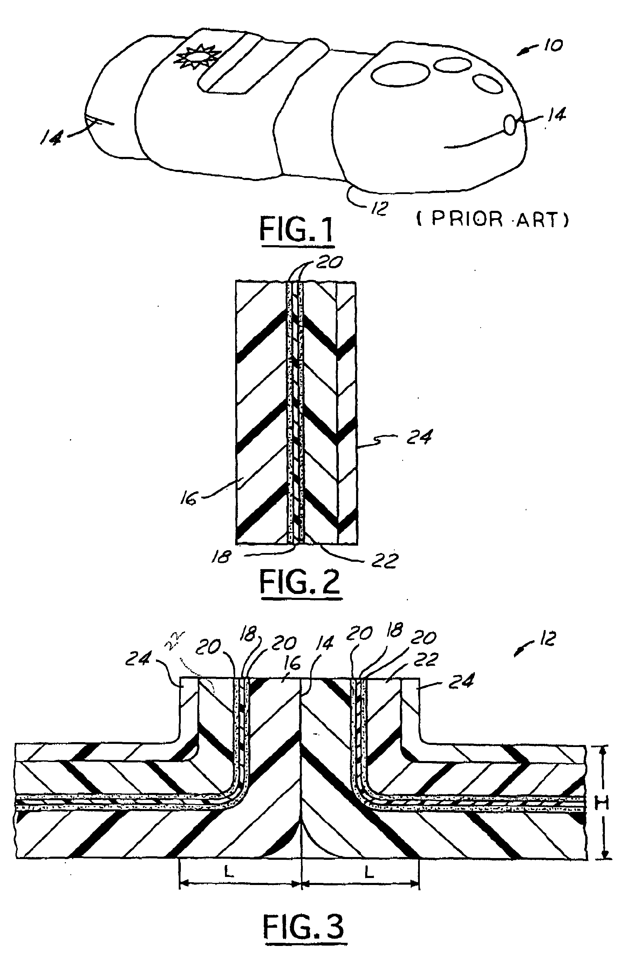

Referring now to Figure 1, a multilayer plastic fuel tank 10 is illustrated that is commonly used in the automotive industry. The tank 10 is typically produced in a continuous blow molding process in much the same way as small plastic bottles are produced. A cylindrical parison (e.g. a sheet of hot-molten plastic) of the multilayers of plastic is generated at a blow molding head (not shown). The mold clamping mechanism eventually closes the parison and the parison is blown against the mold walls (not shown) by air injected through a pin and/or needle (not shown) as is well known in the art. Since the mold walls simply cut through the parison at the top and bottom, there remains two long seams, or pinch off regions 14, where the walls 12 from opposite sides of the parison are simply adhered together. The pinch off region 14 is best illustrated in Figure 3 below.

Of course, multilayer fuel tanks 10 having a pinch off region 14 may be produced using other techniques that are well known in the art. For example, two multilayer sheets may be adhered together that have previously been thermoformed into appropriate shapes.

As best seen in Figure 2, the walls 12 of tank 10 are typically composed of six layers of coextruded plastic. The innermost layer 16 and outermost layer 24 are made of high-density polyethylene (HDPE); typically a small amount of carbon black is compounded with the HDPE in the outermost layer 24. A thick regrind layer 22 is made mainly of HDPE, since regrind is obtained from scrap generated in the production process. A thin ethylene vinyl alcohol (EVOH) copolymer layer 18 in the middle of the wall 12 provides the barrier that greatly reduces hydrocarbon permeation through the wall 12. An adhesive 20 of functionalized low-density polyethylene (LDPE), such as an ethylene-α-maleic anhydride copolymer, is placed on each side of the EVOH layer 18 to ensure that the EVOH layer 18 is bonded to the innermost layer 16 and regrind layer 22. Of course other plastic materials, such as nylon, are currently used as a barrier layers. Further, other polymers, such as polyethylene terephthalate, polypropylenes or other polyolefins are currently used as carrier films, such as in the innermost layer 16 or outermost layer 24.

As best seen in Figure 3, the innermost layer 16 of the cylindrical parison is adhered to itself to form an enclosed fuel tank 10. This process creates the pinch off region 14. As only the innermost layer 16 is actually adhered to itself, the EVOH layer 18 in the pinch off region 14 is not continuous. Because the EVOH layer 18 is not continuous and because the HDPE is a poor barrier to hydrocarbon permeation, hydrocarbons may permeate through the innermost layer 16 of the pinch off region 14 and into the environment. It is believed that as much as 20 mg to 50 mg of hydrocarbon permeate per day may migrate through the unprotected pinch off region 14.

The permeation process can be described as a multistep event. First, collision of the permeate molecule with the polymer (here, the HDPE in the innermost layer 16) is followed by sorption into the polymer. Next, migration through the polymer matrix by random hops occurs and finally desorption of the penetrant (here, hydrocarbons from fuel) from the polymer completes the process. The diffusion rate and solubility of the molecule (sorption and desorption) in the film affects the amount of permeate that flows through the film.

Studies have found that the amount of hydrocarbons permeating through the pinch off region 14 is inversely proportional to the length of the diffusion path. The original diffusion path is a function of the thickness H of the wall 12 in the pinch off region 14.

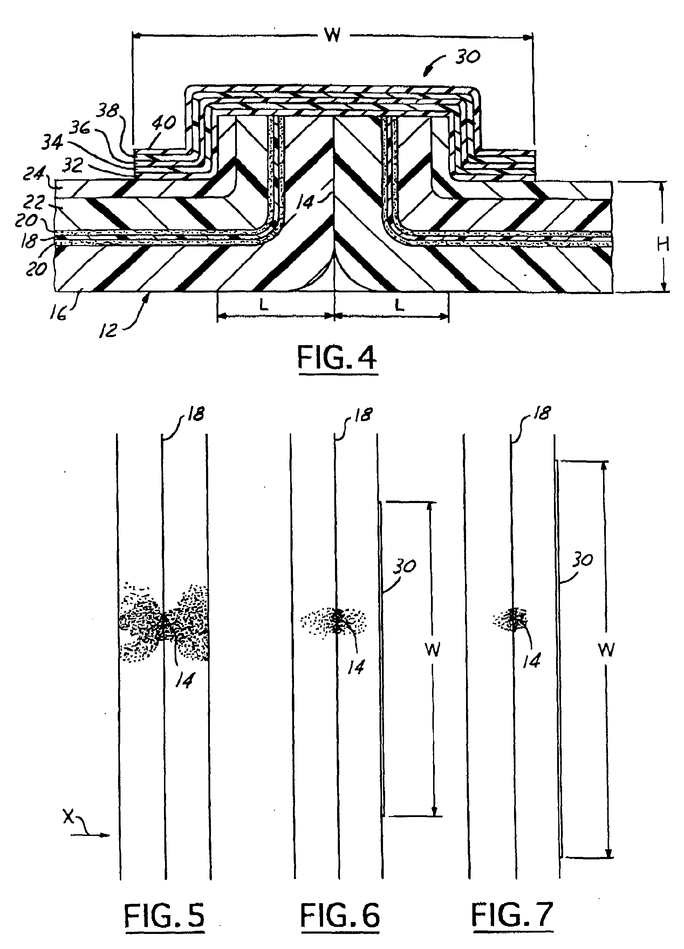

The strategy of the present invention is to lengthen the original diffusion path by one order of magnitude or more. In a preferred embodiment of the present invention, this is accomplished by heat welding or otherwise applying a multilayer plastic patch 30 on the outside of the fuel tank 10 over the pinch off region 14 (as shown in Figure 4).

As best seen in Figure 4, the multilayer plastic patch 30 has a very similar structure to the fuel tank 10 itself. It contains an innermost layer 32 and outermost layer 40 composed of HDPE. The barrier layer 36 is composed of an EVOH copolymer, and is secured to the innermost 32 and outermost layer 40 by a pair of adhesive layers 34, 38 of a composition of functionalized LDPE similar to adhesive layers 20 of the fuel tank 10.

Referring now to Figure 5, a computer simulation of permeate diffusion of the X-component of the flux through the pinch off region 14 in the absence of the patch 30 is illustrated. The simulation indicates that there is a large amount of permeate diffusion (flux) flowing through the pinch off region 14 in the absence of a patch 30.

Figures 6 and 7 illustrate a computer simulation of permeate diffusion of the X-component of the flux through the pinch off region 14 when a patch 30 having a width w is added. The width w of the patch 30 is measured perpendicular to the seam of the pinch off region 14.

In Figure 6, the width W of the patch 30 according to one preferred embodiment of the present invention is approximately 4 times as large as the thickness of the wall 12 (represented by height H) in the pinch off region 14. With this arrangement, the diffusion path of hydrocarbons is lengthened dramatically, resulting in substantially decreased fuel vapor emission through the pinch off region 14 as shown in the computer simulation.

As the width W is increased to 8 times the thickness of the tank wall 12, as illustrated in another preferred embodiment shown in Figure 7, the hydrocarbon permeate diffusion through the pinch off region 14 practically disappears. Studies have indicated that one order of magnitude or larger reduction in hydrocarbon permeate emissions from plastic fuel tanks containing a patch 30 according to the present invention is possible.

Figures 6 and 7 illustrate that the amount of hydrocarbon permeation through the pinch off region 14 is inversely proportional to the length of the diffusion path. Thus, as the width W of the patch 30 increases, corresponding to an increase in the diffusion path, the amount of hydrocarbon permeate emission through the pinch off region 14 decreases. It should be understood that the above graphs are merely exemplary and are not intended to be limiting.

Thus, the present invention provides a simple and robust approach for limiting or eliminating hydrocarbon permeate emission through a pinch off region 14 in a multilayer plastic fuel tank 10 by providing a patch 30 having a width W to cover the pinch off region 14. The width W of the patch 30 may be varied depending upon the acceptable emissions requirements of a system having a multilayer fuel tank 10, but is preferably wide enough so as to decrease the level of hydrocarbon permeate emissions by an order of one magnitude or more.

While the invention has been described in terms of preferred embodiments, it will be understood, of course, that the invention is not limited thereto since modifications may be made by those skilled in the art, particularly in light of the foregoing teachings. For example, it is specifically contemplated that the present invention could be used in any application requiring emissions control from a multilayer plastic fluid vessel. Also, it is contemplated that the patch 30 need only contain a barrier resistant layer made of metal or any other impermeable/low permeation material that can be adhered to the outermost layer 24 of the fuel tank 12 over the pinch off region 14. Further, this invention covers any other application process capable of providing good adhesion between the patch 30 and the tank 12 surface including but not limited to any other impermeable/low permeation materials made of metal or other non-metal materials. Finally, the present invention is not limited to the current process for attaching the patch 30 to the surface of the tank 12, but could include any other processes including spin welding, laser, or applying the patch as a coating or plasma layer.

## Claims

1. A low permeation multilayer plastic patch for reducing emissions from a plastic fluid tank, wherein the patch has a predefined width and length capable of reducing hydrocarbon permeation by at least one order of magnitude, the patch comprising:
a polymeric inner layer and a polymeric outer layer;
a low permeation barrier layer between said polymeric inner layer and said polymeric outer layer;
a first polymeric adhesive layer for bonding said polymeric inner layer to one side of said low permeation barrier; and
a second polymeric adhesive layer for bonding said polymeric outer layer to the other side opposite said one side of said low permeation barrier.

2. The patch of claim 1, wherein said polymeric inner layer and said polymeric outer layer are composed of high-density polyethylene.

3. The patch of claim 1, wherein said low permeation barrier layer is composed of an ethylene vinyl alcohol copolymer.

4. The patch of claim 1, wherein said first polymeric adhesive layer and said second polymeric adhesive layer are composed of a functionalized low-density polyethylene.

5. A multilayer plastic fluid tank comprising:
a multilayer wall having a polymeric inner layer and outer layer and a low permeation barrier layer therebetween, said multilayer wall having a pinch off region; and
a low permeation patch coupled to said pinch off region and said polymeric outer layer, said low permeation patch having a predetermined width and length that is capable of reducing permeation of hydrocarbons from the multilayer fluid tank.

6. The multilayer fluid tank of claim 5, wherein said low permeation patch comprises:
a polymeric inner layer and a polymeric outer layer;
a low permeation barrier layer between said polymeric inner layer and said polymeric outer layer;
a first polymeric adhesive layer for bonding said polymeric inner layer to one side of said low permeation barrier; and
a second polymeric adhesive layer for bonding said polymeric outer layer to the other side of said low permeation barrier.

7. The multilayer fluid tank of claim 6, wherein said polymeric inner layer and said polymeric outer layer are composed of high-density polyethylene.

8. The multilayer fluid tank of claim 6, wherein said low permeation barrier layer is composed of ethylene vinyl alcohol copolymer.

9. The multilayer fluid tank of claim 6, wherein said first polymeric adhesive layer and said second polymeric adhesive layer are composed of a functionalized low-density polyethylene.

10. The multilayer fluid tank of claim 5, wherein said low permeation multilayer patch is heat welded to said multilayer wall.

11. The multilayer fluid tank of claim 5, wherein said length and said width of said low permeation multilayer patch are sufficient to cover the entire pinch off region.

12. The multilayer fluid tank of claim 5, wherein said width of said low permeation multilayer patch is a function of the thickness of the multilayer wall in the pinch off region.

13. The multilayer fluid tank of claim 12, wherein said width of said low permeation multilayer patch is at least 4 times as great as said thickness of said multilayer wall in said pinch off region.

14. The multilayer fluid tank of claim 12, wherein said width of said low permeation patch is capable of reducing hydrocarbon emissions from the fuel tank by at least one order of magnitude.
